# EUROPEAN PATENT APPLICATION

(11) **EP 4 292 956 A1**
(43) Date of publication of application: **20.12.2023**
(21) Application number: 22752711.6
(22) Date of filing: 07.02.2022
(51) Int. Cl.: B65G 1/00, B65G 1/137

(54) **INFORMATION PROCESSING DEVICE, INFORMATION PROCESSING METHOD, PROGRAM, AND SYSTEM**

(30) Priority: 15.02.2021 JP 2021021810
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/004666
(87) International publication number: WO 2022/172887

(57) **Abstract**

An information processing device, an information processing method, a program and a system capable of effectively performing palletizing are provided. According to an embodiment, the information processing device includes a communication unit and a processor. The communication unit communicates with a host device that manages articles and sorting destinations of the articles and an automated guided vehicle that transports a roll pallet on which articles are loaded for each sorting destination. The processor acquires the articles and information on the sorting destinations of the articles from the host device via the communication unit and performs control to transmit a control signal to the automated guided vehicle to transport the roll pallet set for each sorting destination to a predetermined region via the communication unit.

## Description

### FIELD

Embodiments described herein relate generally to an information processing device, information processing method, program, and system.

### BACKGROUND

A system for sorting articles for respective destinations is provided. Such a system includes a sorter for sorting the articles for respective destinations. The system includes a mechanism for palletizing the articles sorted for respective destinations by the sorter. The system needs to include a palletizing mechanism for respective sorting destinations.

Therefore, the conventional system has a problem whereby the cost is increased when palletizing is automated.

### CITATION LIST

### PATENT LITERATURE

Patent Literature 1: Jpn. Pat. Appln. KOKAI Publication No. 2020-152461

### SUMMARY

### TECHNICAL PROBLEM

To solve the problem described above, an information processing device, an information processing method, a program and a system capable of effectively performing palletizing are provided.

### SOLUTION TO PROBLEM

According to an embodiment, the information processing device includes a communication unit and a processor. The communication unit communicates with a host device that manages articles and sorting destinations of the articles and an automated guided vehicle that transports a roll pallet on which articles are loaded for each sorting destination. The processor acquires the articles and information on the sorting destinations of the articles from the host device via the communication unit and performs control to transmit a control signal to the automated guided vehicle to transport the roll pallet set for each sorting destination to a predetermined region via the communication unit.

### BRIEF DESCRIPTION OF THE DRAWINGS

FIG. 1 is a diagram schematically illustrating a configuration example of a logistics system according to a first embodiment.
FIG. 2 is a block diagram illustrating a configuration example of a control system of the logistics system according to the first embodiment.
FIG. 3 is a block diagram illustrating a configuration example of a WES according to the first embodiment.
FIG. 4 is a block diagram illustrating a configuration example of a first WCS according to the first embodiment.
FIG. 5 is a block diagram illustrating a configuration example of a second WCS according to the first embodiment.
FIG. 6 is a block diagram illustrating a configuration example of a robot according to the first embodiment.
FIG. 7 is a block diagram illustrating a configuration example of an AGV according to the first embodiment.
FIG. 8 illustrates a configuration example of a sorting list according to the first embodiment.
FIG. 9 illustrates a configuration example of an inventory database according to the first embodiment.
FIG. 10 is a flowchart illustrating an operation example of the WES according to the first embodiment.
FIG. 11 is a diagram schematically illustrating a configuration example of a logistics system according to a second embodiment.
FIG. 12 is a flowchart illustrating an operation example of a WES according to the second embodiment.
FIG. 13 is a diagram schematically illustrating a configuration example of a logistics system according to a third embodiment.
FIG. 14 is a block diagram illustrating a configuration example of an AGV according to a third embodiment.
FIG. 15 is a diagram illustrating an operation example of a logistics system according to the third embodiment.
FIG. 16 is a diagram illustrating an operation example of the logistics system according to the third embodiment.
FIG. 17 is a flowchart illustrating an operation example of a WES according to the third embodiment.

### DETAILED DESCRIPTION

Hereinafter, embodiments will be described with reference to the drawings.

### (First Embodiment)

First, the first embodiment will be described.

A logistics system according to the embodiment sorts articles stored in a warehouse for respective destinations. The logistics system uses an automated guided vehicle (AGV) to summon a roll pallet on which articles are loaded for each destination. The logistics system delivers a warehouse pallet loaded with articles from the warehouse. The logistics system uses a robot to move the articles from the warehouse pallet to the summoned roll pallet. The logistics system carries the articles loaded onto the roll pallet into a truck or the like.

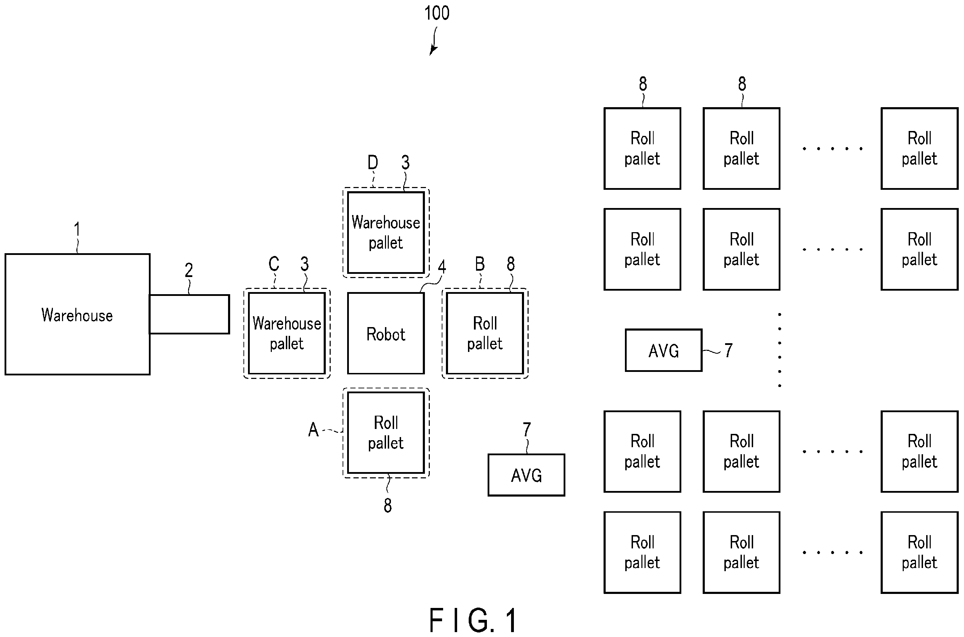

FIG. 1 schematically illustrates a configuration example of a logistics system 100 according to the embodiment. As shown in FIG. 1, the logistics system 100 includes a warehouse 1, a conveyor 2, a warehouse pallet 3, a robot, an AGV 7, a roll pallet 8, and the like.

The robot 4 grips and moves articles. The robot 4 grips articles existing in regions A to D formed therearound. The robot 4 loads the gripped articles onto the regions A to D. The robot 4 will be described in detail later.

The warehouse 1 stores in advance the warehouse pallet 3 loaded with articles. The warehouse 1 stores a plurality of warehouse pallets 3. The warehouse pallets 3 are supplied to the warehouse 1 by a robot or a person in charge.

The warehouse pallet 3 is loaded with articles. Here, the warehouse pallet 3 is loaded with a single type of articles (single loading). The warehouse pallet 3 may be loaded with a predetermined type of a plurality of articles.

The conveyor 2 (delivering mechanism) delivers the warehouse pallets 3 from the warehouse 1 according to a control signal from a WES 10 (information processing device) described later or the like. For example, the warehouse pallets 3 are loaded onto the conveyor 2 through an operation of a robot, a person in charge, or the like. The conveyor 2 delivers the loaded warehouse pallets 3.

The conveyor 2 delivers the warehouse pallets 3 to the regions C and D according to a control signal of the WES 10 or the like. The conveyor 2 returns the warehouse pallets 3 existing in the regions C and D back to the warehouse 1. The conveyor 2 may be formed integrally with the warehouse 1.

The AGV 7 transports the roll pallet 8. The AGV 7 operates based on a control signal or the like from the WES 10 or the like. For example, the AGV 7 travels toward a designated loading position, and lifts the roll pallet 8 at the designated loading position. The AGV 7 travels toward a designated unloading position (region A or B), and unloads the roll pallet 8 at the designated unloading position. The AGV 7 will be described in detail later.

The logistics system 100 includes a plurality of AGVs 7.

A plurality of roll pallets 8 are arranged in a predetermined area. The roll pallet 8 is a shelf for storing articles. Each roll pallet 8 stores articles to be distributed to each destination.

For example, the roll pallet 8 stands upright on four pillars. The height of the roll pallet 8 below the shelf (the height from the floor surface to the shelf bottom) is higher than the height of the AGV 7. Accordingly, the AGV 7 can get under the shelf of the roll pallet 8. The AGV 7 that has gotten under the shelf lifts the roll pallet 8 using a pusher to such an extent that distal ends of the pillars are separated from the floor surface by several centimeters, and travels with the roll pallet 8 in a lifted state. The AGV 7 transports the roll pallet 8 in this manner.

Shelf identification information that can be read by a fixed camera, a movable camera, or the like may be attached to the roll pallet 8. Article identification information that can be read by a fixed camera, a mobile camera, or the like may be attached to the article. For example, the shelf identification information and the article identification information are bar codes or two-dimensional codes. The logistics system 100 may include a plurality of readers for reading the shelf identification information and the article identification information separately from the fixed camera or the mobile camera.

The roll pallet 8 may include a basket or the like. The roll pallet 8 may include casters such as a basket cart.

Next, a control system of the logistics system 100 will be described.

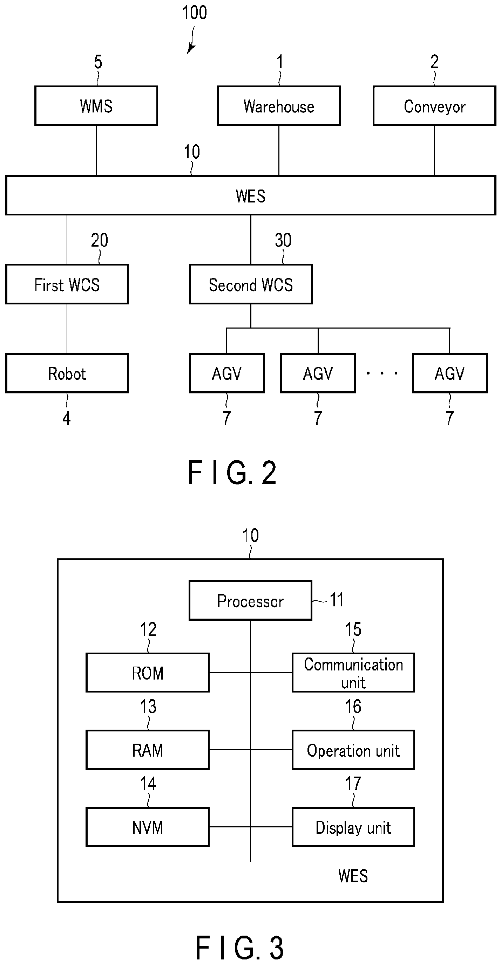

FIG. 2 shows a configuration example of a control system of the logistics system 100. As shown in FIG. 2, the logistics system 100 includes a warehouse 1, a conveyor 2, a robot 4, a WMS 5, an AGV 7, a WES 10, a first WCS 20, a second WCS 30, and the like.

The WES 10 is communicatively connected to the warehouse 1, the conveyor 2, the WMS 5, the first WCS 20 and the second WCS 30. The first WCS 20 is communicably connected to the robot 4. The second WCS 30 is communicatively connected to the AGV 7.

The warehouse management system (WMS) 5 (host device) controls the entire logistics system 100. The WMS 5 transmits a sorting list that indicates articles and sorting destinations (destinations) of the articles to the WES 10. The sorting list will be described in detail later.

For example, the WMS 5 includes a PC and the like.

The warehouse execution system (WES) 10 controls the robot 4 and the AGV 7 according to the sorting list from the WMS 5. The WES 10 controls the robot 4 through the first WCS 20. The WES 10 controls the AGV 7 through the second WCS 30. The WES 10 will be described in detail later.

The first warehouse control system (WCS) 20 controls the robot 4 according to a control signal from the WES 10. The first WCS 20 functions as a controller of the robot 4. The first WCS 20 will be described in detail later.

The second WCS 30 controls the AGV 7 according to a control signal from the WES 10. The second WCS 30 functions as a controller of the AGV 7. The second WCS 30 will be described in detail later.

The logistics system 100 may include other configurations as necessary in addition to the configurations shown in FIGS. 1 and 2, or a specific configuration may be excluded from the logistics system 100.

Next, the WES 10 will be described.

FIG. 3 is a block diagram illustrating a configuration example of the WES 10. As illustrated in FIG. 3, the WES 10 includes a processor 11, a ROM 12, a RAM 13, an NVM 14, a communication unit 15, an operation unit 16, a display unit 17, and the like.

The processor 11 is mutually connected to the ROM 12, the RAM 13, the NVM 14, the communication unit 15, the operation unit 16, and the display unit 17 via a data bus or the like.

The WES 10 may include other configurations as necessary in addition to the configuration shown in FIG. 3, or a specific configuration may be excluded from the WES 10.

The processor 11 has a function of controlling the entire operation of the WES 10. The processor 11 may include an internal cache, various interfaces, and the like. The processor 11 realizes various processes by executing a program stored in advance in the internal memory, the ROM 12, or the NVM 14.

Some of the various functions realized by the processor 11 executing the program may be realized by hardware circuitry. In this case, the processor 11 controls the functions executed by the hardware circuitry.

The ROM 12 is a non-volatile memory in which control programs, control data and the like are stored in advance. The control program and control data stored in the ROM 12 are incorporated in advance according to the specifications of the WES 10.

The RAM 13 is a volatile memory. The RAM 13 temporarily stores data being processed by the processor 11. The RAM 13 stores various application programs based on instructions from the processor 11. The RAM 13 may store data necessary for executing the application program, an execution result of the application program, and the like.

The NVM 14 is a non-volatile memory in which data is writable and rewritable. The NVM 14 includes, for example, a hard disk drive (HDD), a solid-state drive (SSD), a flash memory, or the like. The NVM 14 stores a control program, an application, and various kinds of data according to the operation purpose of the WES 10.

The NVM 14 stores an inventory database indicating articles stored in the warehouse 1. The inventory database will be described in more detail below.

The communication unit 15 is an interface for communicating with the warehouse 1, the conveyor 2, the WMS 5, the first WCS 20, the second WCS 30, and the like. For example, the communication unit 15 is an interface for transmitting and receiving data to and from the warehouse 1, the conveyor 2, the WMS 5, the first WCS 20, the second WCS 30, and the like through a network. The communication unit 15 is connected to the robot 4 via the first WCS 20. The communication unit 15 is connected to the AGV 7 via the second WCS 30. For example, the communication unit 15 is an interface supporting wired or wireless LAN connection.

The communication unit 15 functions as an interface for controlling the robot 4 and the AGV 7.

The operation unit 16 receives inputs of various operations from an operator. The operation unit 16 transmits a signal indicating the input operation to the processor 11. The operation unit 16 may be configured by a touch panel.

The display unit 17 displays image data from the processor 11. For example, the display unit 17 includes a liquid crystal monitor. If the operation unit 16 is configured by a touch panel, the display unit 17 may be integrally formed with the operation unit 16.

Next, the first WCS 20 will be described.

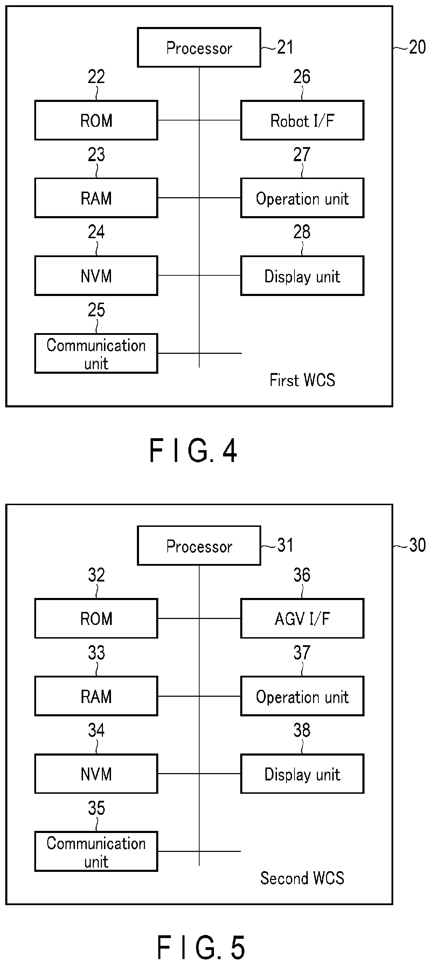

FIG. 4 is a block diagram illustrating a configuration example of the first WCS 20. As illustrated in FIG. 4, the first WCS 20 includes a processor 21, a ROM 22, a RAM 23, an NVM 24, a communication unit 25, a robot interface 26, an operation unit 27, a display unit 28, and the like.

The processor 21 is mutually connected to the ROM 22, the RAM 23, the NVM 24, the robot interface 26, the communication unit 25, the operation unit 27, and the display unit 28 via a data bus or the like.

The first WCS 20 may include other configurations as necessary in addition to the configuration shown in FIG. 4, or a specific configuration may be excluded from the first WCS 20.

The processor 21 has a function of controlling the entire operation of the first WCS 20. The processor 21 may include an internal cache, various interfaces, and the like. The processor 21 realizes various processes by executing a program stored in advance in the internal memory, the ROM 22, or the NVM 24.

Some of the various functions realized by the processor 21 executing the program may be realized by hardware circuitry. In this case, the processor 21 controls the functions executed by the hardware circuitry.

The ROM 22 is a non-volatile memory in which control programs, control data and the like are stored in advance. The control program and control data stored in the ROM 22 are incorporated in advance according to the specifications of the first WCS 20.

The RAM 23 is a volatile memory. The RAM 23 temporarily stores data being processed by the processor 21. The RAM 23 stores various application programs based on instructions from the processor 21. The RAM 23 may store data necessary for executing the application program, an execution result of the application program, and the like.

The NVM 24 is a non-volatile memory in which data is writable and rewritable. The NVM 24 includes, for example, an HDD, an SSD, a flash memory, or the like. The NVM 24 stores a control program, an application, and various kinds of data according to the operation purpose of the first WCS 20.

The communication unit 25 is an interface for communicating with the WES 10 or the like. For example, the communication unit 25 is an interface for transmitting and receiving data to and from the WES 10 and the like through a network. For example, the communication unit 25 is an interface supporting wired or wireless LAN connection.

The robot interface 26 is an interface for communicating with the robot 4. The robot interface 26 may support universal serial bus (USB) connection.

The operation unit 27 receives inputs of various operations from an operator. The operation unit 27 transmits a signal indicating the input operation to the processor 21. The operation unit 27 may be configured by a touch panel.

The display unit 28 displays image data from the processor 21. For example, the display unit 28 includes a liquid crystal monitor. If the operation unit 27 is configured by a touch panel, the display unit 28 may be integrally formed with the operation unit 27.

The communication unit 25 and the robot interface 26 may be integrally formed.

The processor 21 controls the robot 4 according to a control signal from the WES 10. For example, the processor 21 causes the robot 4 to grip articles existing at predetermined positions (regions A to D). The processor 21 further causes the robot 4 to load the gripped articles onto predetermined positions (regions A to D).

Next, the second WCS 30 will be described.

FIG. 5 is a block diagram illustrating a configuration example of the second WCS 30. As shown in FIG. 5, the second WCS 30 includes a processor 31, a ROM 32, a RAM 33, an NVM 34, a communication unit 35, an AGV interface 36, an operation unit 37, a display unit 38, and the like.

The processor 31 is mutually connected to the ROM 32, the RAM 33, the NVM 34, the AGV interface 36, the communication unit 35, the operation unit 37, and the display unit 38 via a data bus or the like.

The second WCS 30 may include other configurations as necessary in addition to the configuration shown in FIG. 5, or a specific configuration may be excluded from the second WCS 30.

The processor 31 has a function of controlling the entire operation of the second WCS 30. The processor 31 may include an internal cache, various interfaces, and the like. The processor 31 realizes various processes by executing a program stored in advance in the internal memory, the ROM 32, or the NVM 34.

Some of the various functions realized by the processor 31 executing the program may be realized by hardware circuitry. In this case, the processor 31 controls the functions executed by the hardware circuitry.

The ROM 32 is a non-volatile memory in which control programs, control data and the like are stored in advance. The control program and control data stored in the ROM 32 are incorporated in advance according to the specifications of the second WCS 30.

The RAM 33 is a volatile memory. The RAM 33 temporarily stores data being processed by the processor 31. The RAM 33 stores various application programs based on instructions from the processor 31. The RAM 33 may store data necessary for executing the application program, an execution result of the application program, and the like.

The NVM 34 is a non-volatile memory in which data is writable and rewritable. The NVM 34 includes, for example, an HDD, an SSD, a flash memory, or the like. The NVM 34 stores a control program, an application, and various kinds of data according to the operation purpose of the second WCS 30.

The communication unit 35 is an interface for communicating with the WES 10 or the like. For example, the communication unit 35 is an interface for transmitting and receiving data to and from the WES 10 and the like through a network. For example, the communication unit 35 is an interface supporting wired or wireless LAN connection.

The AGV interface 36 is an interface for communicating with the AGV 7. The AGV interface 36 wirelessly connects to the AGV 7. For example, the AGV interface 36 may support wireless LAN connection.

The operation unit 37 receives inputs of various operations from an operator. The operation unit 37 transmits a signal indicating the input operation to the processor 31. The operation unit 37 may be configured by a touch panel.

The display unit 38 displays image data from the processor 31. For example, the display unit 38 includes a liquid crystal monitor. If the operation unit 37 is configured by a touch panel, the display unit 38 may be integrally formed with the operation unit 37.

The communication unit 35 and the AGV interface 36 may be integrally formed.

The processor 31 controls the AGV 7 according to a control signal from the WES 10. For example, the processor 31 causes the AGV 7 to transport the roll pallets 8 to the regions A and B. The processor 31 further causes the AGV 7 to transport the roll pallets 8 from the regions A and B to the original position.

Next, the robot 4 will be described.

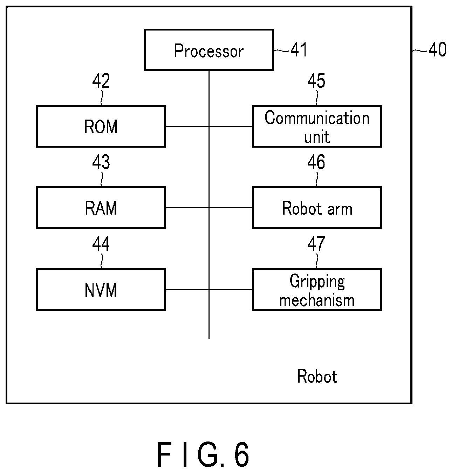

FIG. 6 is a block diagram illustrating a configuration example of the robot 4. As illustrated in FIG. 6, the robot 4 includes a processor 41, a ROM 42, a RAM 43, an NVM 44, a communication unit 45, a robot arm 46, a gripping mechanism 47, and the like.

The processor 41 is mutually connected to the ROM 42, the RAM 43, the NVM 44, the communication unit 45, the robot arm 46, and the gripping mechanism 47 via a data bus or the like.

The robot 4 may include other configurations as necessary in addition to the configuration shown in FIG. 6, or a specific configuration may be excluded from the robot 4.

The processor 41 has a function of controlling the entire operation of the robot 4. The processor 41 may include an internal cache, various interfaces, and the like. The processor 41 realizes various processes by executing a program stored in advance in the internal memory, the ROM 42, or the NVM 44.

Some of the various functions realized by the processor 41 executing the program may be realized by hardware circuitry. In this case, the processor 41 controls the functions executed by the hardware circuitry.

For example, the processor 41 is a central processing unit (CPU). The processor 41 may be realized by hardware such as a large scale integration (LSI), an application specific integrated circuit (ASIC), or a field-programmable gate array (FPGA).

The ROM 42 is a non-volatile memory in which control programs, control data and the like are stored in advance. The control program and control data stored in the ROM 42 are incorporated in advance according to the specifications of the robot 4.

The RAM 43 is a volatile memory. The RAM 43 temporarily stores data being processed by the processor 41. The RAM 43 stores various application programs based on instructions from the processor 41. The RAM 43 may store data necessary for executing the application program, an execution result of the application program, and the like.

The NVM 44 is a non-volatile memory in which data is writable and rewritable. The NVM 44 includes, for example, an HDD, an SSD, a flash memory, or the like. The NVM 44 stores a control program, an application, and various kinds of data according to the operation purpose of the robot 4.

The communication unit 45 is an interface for communicating with the first WCS 20 or the like. For example, the communication unit 45 is an interface for transmitting and receiving data to and from the first WCS 20 and the like through a network. For example, the communication unit 45 is an interface supporting USB connection.

The robot arm 46 is a manipulator driven under the control of the processor 41. The robot arm 46 includes a rod-shaped frame, a motor for driving the frame, and the like. The robot arm 46 transports the gripping mechanism 47 to the regions A to D.

The gripping mechanism 47 is installed at a distal end of the robot arm 46. The gripping mechanism 47 moves with the movement of the robot arm 46. When the robot arm 46 moves in a predetermined direction, the gripping mechanism 47 moves to a position where the article is gripped.

The gripping mechanism 47 grips an article. For example, the gripping mechanism 47 includes a suction pad. The suction pad sucks the article. For example, the suction pad sucks the article through vacuum suction. The suction pad causes the inside to have a negative pressure under the control of the processor 41. The suction pad vacuum-sucks the surface of the article by causing the inside to have a negative pressure while being in contact with the surface of the article. The suction pad releases the article upon releasing the negative pressure of the inside.

For example, the gripping mechanism 47 may include a plurality of suction pads.

For the gripping mechanism 47, various gripping mechanisms other than the suction pad may be employed. For example, the gripping mechanism 47 may include a gripper that grips an article. The gripper includes a plurality of fingers and a plurality of joint mechanisms connecting the plurality of fingers. The joint mechanism may be configured such that the finger moves in conjunction with the movement of the joint mechanism. The gripper applies force to the package from opposing directions, for example, at two or more points of contact by the fingers. Thereby, the gripping mechanism 47 grips the article through friction generated between the fingers and the package. For the configuration of the gripping mechanism 47, various gripping mechanisms capable of gripping an article may be used, and the configuration is not limited to a specific configuration.

The processor 41 controls the robot arm 46 and the gripping mechanism 47 according to a control signal from the first WCS 20. For example, the processor 41 grips the articles existing in the regions A to D using the robot arm 46 and the gripping mechanism 47. The processor 41 releases the gripped articles to the regions A to D using the robot arm 46 and the gripping mechanism 47.

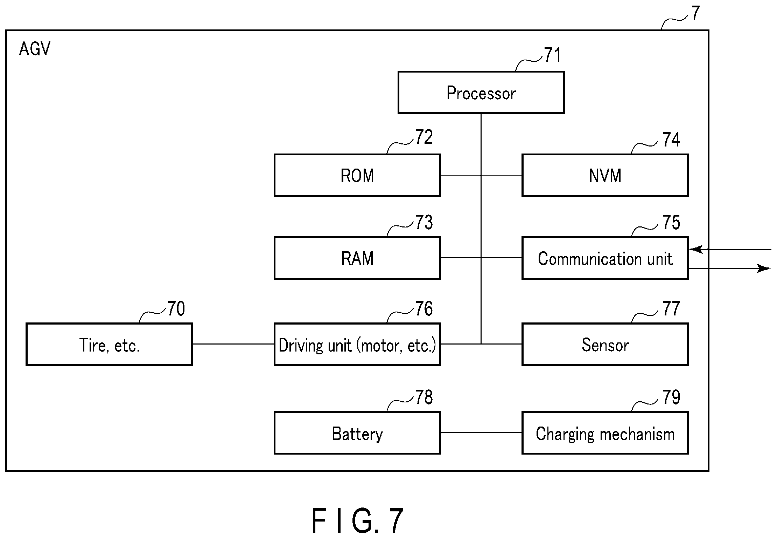

Next, the AGV 7 will be described. FIG. 7 is a block diagram illustrating a configuration example of the AGV 7. The AGV 7 includes a processor 71, a ROM 72, a RAM 73, an NVM 74, a communication unit 75, a driving unit 76, a sensor 77, a battery 78, a charging mechanism 79, a tire 70, and the like.

The AGV 7 may include other configurations as necessary in addition to the configuration shown in FIG. 7, or a specific configuration may be excluded from the AGV 7.

The processor 71 has a function of controlling the entire operation of the AGV 7. The processor 71 may include an internal cache, various interfaces, and the like. The processor 71 realizes various processes by executing a program stored in advance in the internal memory, the ROM 72, or the NVM 74.

For example, the processor 71 is a CPU. The processor 71 may be realized by hardware such as an LSI, an ASIC, or an FPGA.

The processor 71 performs processing such as calculation and control necessary for operations of acceleration, deceleration, stopping, changing direction, and loading and unloading of the roll pallet 8. Based on a control signal from the second WCS 30 or the like, the processor 71 executes a program stored in the ROM 72 or the like, thereby generating a drive signal and outputting the drive signal to each unit.

For example, the second WCS 30 transmits a control signal for moving the AGV 7 from the current position to the first position (the position of the target roll pallet 8) and from the first position to the second position (region A or B). The second WCS 30 transmits a control signal for moving the AGV 7 from the second position to the first position. The processor 71 of the AGV 7 outputs a drive signal according to the control signal transmitted from the second WCS 30. Thereby, the AGV 7 moves from the current position to the first position, from the first position to the second position, and from the second position to the first position. The processor 71 outputs a drive signal according to the loading/unloading instruction of the roll pallet 8 included in the control signal transmitted from the second WCS 30. Thereby, the AGV 7 lifts the roll pallet 8 using the pusher or lowers the lifted roll pallet 8.

The ROM 72 is a non-transitory computer-readable storage media and stores the program described above. The ROM 72 stores data used by the processor 71 in performing various processes, various setting values, or the like. The RAM 73 is a memory used for reading and writing data. The RAM 73 is used as a so-called work area or the like in which data used by the processor 71 in performing various processes is temporarily stored.

The NVM 74 is a non-transitory computer-readable storage media and may store the program described above. The NVM 74 stores data used by the processor 71 in performing various processes, data generated through the processes performed by the processor 71, various setting values, and the like.

The communication unit 75 is an interface for transmitting and receiving data to and from the second WCS 30 or the like through a wireless LAN access point or the like. For example, the communication unit 75 supports wireless LAN connection.

The driving unit 76 is a motor or the like, and the motor is rotated or stopped based on a drive signal output from the processor 71. The power of the motor is transmitted to the tire 70 and then to the steering mechanism. The AGV 7 moves to the target position through the power from the motor.

With the AGV 7 getting under the roll pallet 8, the driving unit 76 rotates the motor (normal rotation) based on the drive signal output from the processor 71. The pusher is raised through the power from the motor to thereby lift the roll pallet 8. After the AGV 7 reaches the target position, the driving unit 76 rotates the motor (reverse rotation) based on the drive signal output from the processor 71. The pusher is lowered through the power from the motor to thereby lower the roll pallet 8 onto the floor surface.

The sensor 77 corresponds to a plurality of reflection sensors. Each reflection sensor is mounted around the AGV 7. Each reflection sensor emits a laser beam, detects a time from emission of the laser beam to returning of the laser beam reflected by an object, detects a distance to the object based on the detected time, and notifies the processor 71 of a detection signal. The processor 71 outputs a control signal for controlling the travel of the AGV 7 based on the detection signal from the sensor 77. For example, based on the detection signal from the sensor 77, the processor 71 outputs a control signal for deceleration, stopping, or the like to avoid collision with the object. A camera may be provided other than the sensor 77, and the camera may capture an image of the surroundings and output the captured image to the processor 71. In this case, the processor 71 analyzes the captured image and outputs a control signal for deceleration, stopping, or the like to avoid collision with the object.

The battery 78 supplies necessary electric power to the driving unit 76 or the like. The charging mechanism 79 is a mechanism that connects the charging station and the battery 78, and the battery 78 is charged with electric power supplied from the charging station or the like via the charging mechanism 79.

Next, the sorting list transmitted by the WMS 5 to the WES 10 will be described.

The sorting list indicates, as described above, articles and sorting destinations (destinations) of the articles.

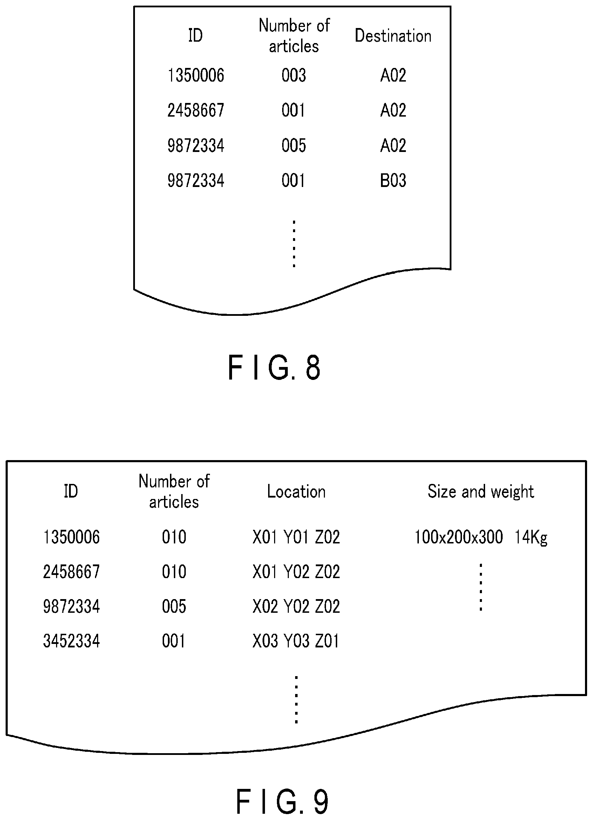

FIG. 8 shows a configuration example of the sorting list. As illustrated in FIG. 8, the sorting list stores records in which "ID", "number of articles", and "destination" are associated with one another.

"ID" is an identifier for specifying an article to be sorted (article to be loaded onto the roll pallet 8). Here, "ID" is a numerical value.

The "number of articles" is the number of articles to be sorted.

The "destination" is a sorting destination of the article. The "destination" corresponds to the roll pallet 8. That is, the "destination" is information with which the processor 11 of the WES 10 can specify the roll pallet 8.

The configuration of the sorting list is not limited to a specific configuration.

Next, the inventory database stored in the NVM 14 of WES 10 will be described.

As described above, the inventory database indicates articles stored in the warehouse 1.

FIG. 9 shows a configuration example of the inventory database. As illustrated in FIG. 9, the inventory database stores "ID", "number of articles", "location", and "size and weight" in association with one another.

"ID" is an identifier for specifying an article stored in the warehouse 1.

The "number of articles" indicates the number of articles stored in the warehouse 1.

The "location" indicates a location where the warehouse pallet 3 on which the articles are loaded exists. The "location" indicates an X coordinate, Y coordinate, and Z coordinate. For example, the X coordinate and the Y coordinate indicate a position on a plane surface. For example, the Z coordinate indicates a floor.

The "size and weight" indicates an outer size and weight of the article.

The configuration of the inventory database is not limited to a specific configuration.

Next, functions realized by the WES 10 will be described. The functions realized by the WES 10 are realized by the processor 11 executing the program stored in the internal memory, the ROM 12, the NVM 14, or the like.

First, the processor 11 has a function of acquiring a sorting list.

The processor 11 receives a sorting list from the WMS 5 via the communication unit 15. The processor 11 may transmit a request demanding a sorting list to the WMS 5 via the communication unit 15.

Upon acquiring the sorting list, the processor 11 rearranges the records of the sorting list. For example, the processor 11 rearranges the records of the sorting list so that the records of the same "destination" are arranged sequentially. The processor 11 may rearrange the records of the sorting list so that the number of times the warehouse pallets 3 and the roll pallets 8 are summoned can be reduced.

Note that it is acceptable for the processor 11 to not rearrange the order of the records of the sorting list.

The processor 11 has a function of loading the articles onto the roll pallets 8 according to the sorting list.

The processor 11 acquires an unprocessed leading record from the sorting list. Upon acquiring the record, the processor 11 specifies a roll pallet 8 corresponding to a "destination" of the acquired record. Upon specifying the roll pallet 8, the processor 11 transports the specified roll pallet 8 to the region A or B by using the AGV 7.

For example, the processor 11 transmits, via the communication unit 15, a control signal to the second WCS 30 for instructing transport of the specified roll pallet 8 to the region A or B.

According to the control signal, the processor 31 of the second WCS 30 transmits a control signal to one of the AGVs 7 through the AGV interface 36 to move under the roll pallet 8.

Upon the AGV 7 moving under the roll pallet 8 according to the control signal, the processor 31 transmits a control signal to the AGV 7 through the AGV interface 36 to lift the roll pallet 8.

Upon the AGV 7 lifting the roll pallet 8 according to the control signal, the processor 31 transmits a control signal to the AGV 7 through the AGV interface 36 to move to the region A or B.

Upon the AGV 7 moving to the region A or B according to the control signal, the processor 31 transmits a control signal to the AGV 7 through the AGV interface 36 to lower the roll pallet 8. The AGV 7 lowers the roll pallet 8 to the region A or B according to the control signal.

Here, it is assumed that the processor 11 transports the roll pallet 8 to the region A by using the AGV.

The processor 11 may specify a subsequent roll pallet 8 (roll pallet 8 on which articles to be loaded next). In this case, the processor 11 may transport the specified roll pallet 8 to the region B by using the AGV 7.

Upon transporting the roll pallet 8 to the region A by using the AGV 7, the processor 11 delivers the warehouse pallet 3 loaded with the articles indicated by the "ID" of the leading record into the region C or D by using the conveyor 2.

For example, the processor 11 specifies, by referring to the inventory database, a position where the warehouse pallet 3 corresponding to the "ID" of the record exists. Upon specifying the position where the warehouse pallet 3 exists, the processor 11 delivers the warehouse pallet 3 at the position to the region C or D by using the conveyor 2.

Here, it is assumed that the processor 11 delivers the warehouse pallet 3 to the region C by using the conveyor 2.

The processor 11 may specify a position where the warehouse pallet 3 corresponding to the "ID" of the next record exists. In this case, the processor 11 may deliver the warehouse pallet 3 at the position to the region D by using the conveyor 2.

Upon delivering the warehouse pallet 3 by using the conveyor 2, the processor 11 takes, by using the robot 4, the articles off of the warehouse pallet 3 in the region C (or D) and loads the articles onto the roll pallet 8 in the region A (or B).

For example, the processor 11 transmits a control signal to the first WCS 20 via the communication unit 15 for instructing loading of the articles of the warehouse pallet 3 in the region C onto the roll pallet 8 in the region A.

The processor 21 of the first WCS 20 causes the robot 4 to grip the articles on the warehouse pallet 3 in the region C according to the control signal. Upon the robot 4 gripping the articles, the processor 21 causes the robot 4 to load the gripped articles onto the roll pallet 8 in the region A.

The processor 11 loads the articles of the warehouse pallet 3 in the region C onto the roll pallet 8 in the region A according to the "number of articles" of the record by using the robot 4.

Upon loading the articles onto the roll pallet 8 in the region A, the processor 11 returns the warehouse pallet 3 in the region C back to the original position by using the conveyor 2. Upon returning the warehouse pallet 3 in the region C back to the original position, the processor 11 updates the inventory database based on the articles and the number of articles loaded onto the roll pallet 8. That is, the processor 11 subtracts the number of articles loaded onto the roll pallet 8 from the number of articles corresponding to the "ID" indicating the articles.

Upon updating the inventory database, the processor 11 delivers the warehouse pallet 3 corresponding to the "ID" of the next record to the region D by using the conveyor 2. If the warehouse pallet 3 is delivered to the region D in advance, the processor 11 may deliver the warehouse pallet 3 corresponding to the "ID" of the following record to the region C.

Upon delivering the warehouse pallet 3 corresponding to the "ID" of the next record to the region D, the processor 11 similarly takes the articles off of the warehouse pallet 3 in the region D and loads the articles onto the roll pallet 8 in the region A by using the robot 4.

The processor 11 repeats the above-described operation, and loads the articles onto the roll pallets 8 in the region A. The processor 11 repeats the above-described operation as long as the "destination" of the current record and the "destination" of the next record are the same.

If the "destination" of the current record differs from the "destination" of the next record, the processor 11 transports the roll pallet 8 in the region A to the original position by using the AGV 7. Upon transporting the roll pallet 8 in the region A to the original position, the processor 11 transports the roll pallet 8 corresponding to the "destination" of the next record (subsequent roll pallet 8) to the region B by using the AGV 7.

If the subsequent roll pallet 8 is transported to the region B in advance, the processor 11 may transport the following roll pallet 8 to the region A.

Upon transporting the subsequent roll pallet 8 to the region B, the processor 11 similarly delivers the warehouse pallet 3 to the region C or D and loads the articles onto the roll pallet 8.

The processor 11 repeats the above-described processing until the processing is completed for each record of the sorting list.

Next, an operation example of the WES 10 will be described.

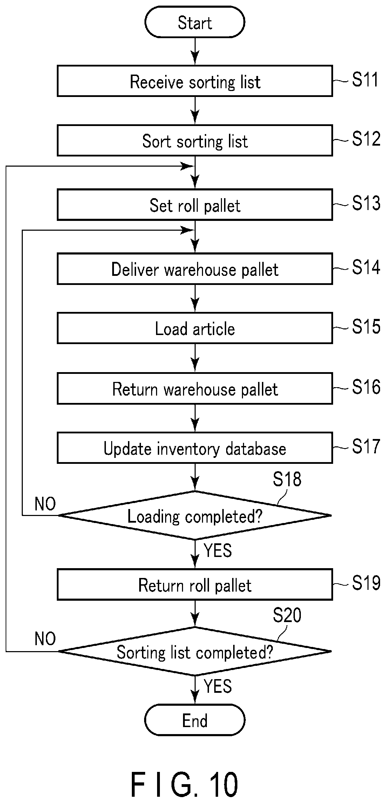

FIG. 10 is a flowchart for explaining an operation example of the WES 10.

First, the processor 11 of the WES 10 receives a sorting list from the WMS 5 via the communication unit 15 (S11). Upon receiving the sorting list, the processor 11 rearranges records of the received sorting list (S12).

Upon rearranging the records of the sorting list, the processor 11 transports a roll pallet 8 corresponding to a "destination" of an unprocessed leading record to the region A or B by using the AGV 7 (S13).

Upon transporting the roll pallet 8 to the region A or B, the processor 11 delivers a warehouse pallet 3 loaded with articles indicated by the "ID" of the record from the warehouse 1 to the region C or D by using the conveyor 2 (S14) .

Upon delivering the warehouse pallet 3, the processor 11 loads the articles of the warehouse pallet 3 onto the roll pallet 8 by using the robot 4 (S15). Upon loading the articles onto the roll pallet 8, the processor 11 returns the warehouse pallet 3 back to the original position by using the conveyor 2 (S16).

Upon returning the warehouse pallet 3 back to the original position, the processor 11 updates an inventory database (S17). Upon updating the inventory database, the processor 11 determines whether loading onto the roll pallets 8 is completed (S18). That is, the processor 11 determines whether the "destination" of the current record and the "destination" of the next record differ.

Upon determining that loading onto the roll pallets 8 is not completed (S18, NO), the processor 11 returns to S14.

Upon determining that loading onto the roll pallets 8 is completed (S18, YES), the processor 11 returns the roll pallet 8 in the region A or B back to the original position by using the AGV 7 (S19). Upon returning the roll pallet 8 in the region A or B back to the original position, the processor 11 determines whether processing of each record of the sorting list is completed (S20).

Upon determining that processing of each record of the sorting list is not completed (S20, NO), the processor 11 returns to S13.

Upon determining that processing of each record of the sorting list is completed (S20, YES), the processor 11 ends the operation.

The processor 11 may deliver the next warehouse pallet 3 to the region C or D while the articles of the warehouse pallet 3 are being loaded onto the roll pallet 8. The processor 11 may transport the subsequent roll pallet 8 to the region A or B while the articles are being loaded onto the roll pallet 8.

The processor 11 may transport the same roll pallet 8 to the region A or B multiple times.

The robot 4 and the first WCS 20 may be integrally formed.

The WES 10, the first WCS 20, and the second WCS 30 may be integrally formed.

The logistics system 100 may include a plurality of robots 4.

The logistics system 100 may include a plurality of warehouses 1.

The logistics system configured as described above summons the roll pallet corresponding to the sorting destination and the warehouse pallet loaded with articles according to the sorting list. Furthermore, the logistics system loads the articles of the warehouse pallet onto the roll pallet by using the robot. Thus, the logistics system is capable of sorting the articles without using a sorter.

### (Second Embodiment)

Next, the second embodiment will be described.

The logistics system according to the second embodiment differs from that according to the first embodiment in that articles are temporarily loaded onto a buffer pallet. Therefore, the other points are denoted by the same reference numerals and will not be described in detail.

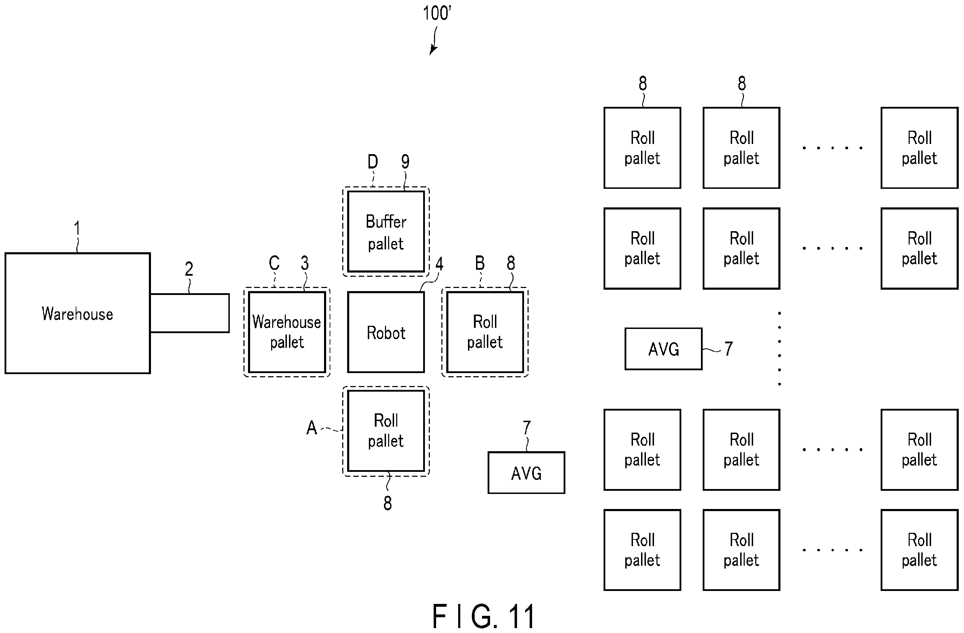

FIG. 11 schematically illustrates a configuration example of a logistics system 100' according to the second embodiment. As shown in FIG. 11, the logistics system 100' includes a buffer pallet 9 (first buffer mechanism) in the region D.

The buffer pallet 9 is a pallet onto which an article is temporarily loaded. The buffer pallet 9 is temporarily loaded with an article taken off of the warehouse pallet 3 by the robot 4.

Here, the warehouse pallet 3 is loaded with a plurality of types of articles (mixed loading).

Next, functions realized by the WES 10 according to the second embodiment will be described.

The WES 10 according to the second embodiment realizes the following functions in addition to the functions of that according to the first embodiment.

The processor 11 of the WES 10 has a function of temporarily loading an article of the warehouse pallet 3 onto the buffer pallet 9.

Here, it is assumed that the processor 11 transports the roll pallet 8 to the region A (or B) by using the AGV 7. It is also assumed that the processor 11 delivers the warehouse pallet 3 to the region C by using the conveyor 2.

The processor 11 determines whether an article to be sorted (target article) can be taken off of the warehouse pallet 3 without moving another article. For example, the processor 11 determines whether the target article is loaded on the loading surface of the warehouse pallet 3.

Upon determining that the target article cannot be taken off of the warehouse pallet 3 without moving another article, the processor 11 takes an article (obstructing article) that obstructs taking of the target article off of the warehouse pallet 3 and loads it onto the buffer pallet 9 by using the robot 4. For example, the processor 11 takes off of an article loaded onto the target article as an obstructing article and loads it onto the buffer pallet 9.

Upon loading the obstructing article onto the buffer pallet 9, the processor 11 takes the target article off of the warehouse pallet 3 and loads it onto the roll pallet 8 in the region A (or B) by using the robot 4. Upon loading the target article onto the roll pallet 8, the processor 11 returns the obstructing article loaded onto the buffer pallet 9 back to the warehouse pallet 3 by using the robot 4.

Next, an operation example of the WES 10 will be described.

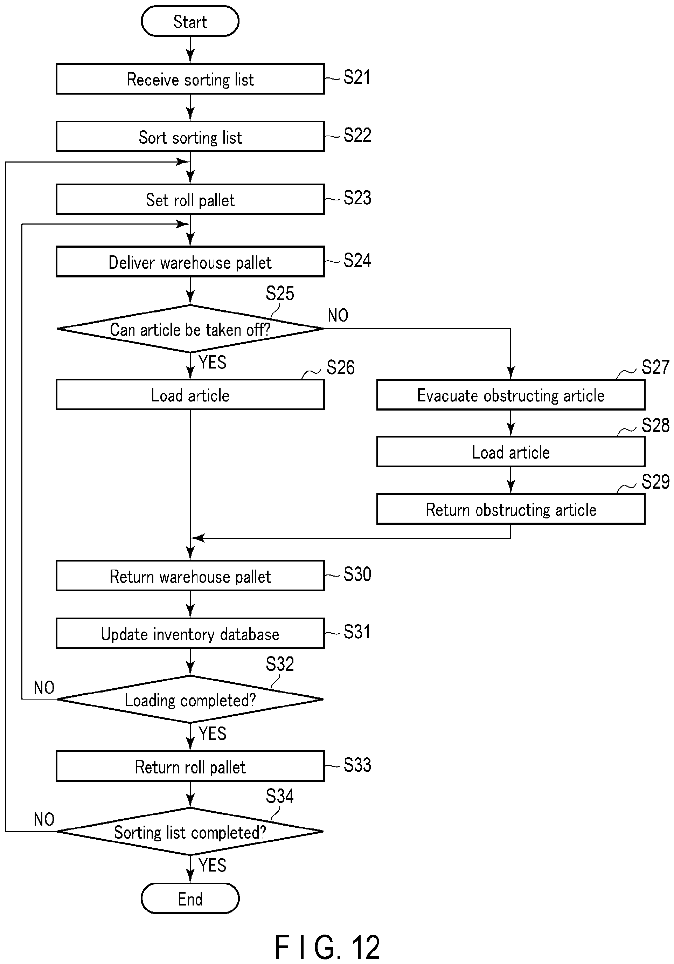

FIG. 12 is a flowchart for explaining an operation example of the WES 10.

First, the processor 11 of the WES 10 receives a sorting list from the WMS 5 via the communication unit 15 (S21). Upon receiving the sorting list, the processor 11 rearranges records of the received sorting list (S22).

Upon rearranging the records of the sorting list, the processor 11 transports a roll pallet 8 corresponding to a "destination" of an unprocessed leading record to the region A or B by using the AGV 7 (S23).

Upon transporting the roll pallet 8 to the region A or B, the processor 11 delivers a warehouse pallet 3 loaded with articles indicated by the "ID" of the record from the warehouse 1 to the region C by using the conveyor 2 (S24).

Upon delivering the warehouse pallet 3, the processor 11 determines whether an article can be taken off without moving another article (S25). Upon determining that the article can be taken off without moving another article (S25, YES), the processor 11 loads the article of the warehouse pallet 3 onto the roll pallet 8 by using the robot 4 (S26).

Upon determining that the article cannot be taken off without moving another article (S25, NO), the processor 11 loads an obstructing article of the warehouse pallet 3 onto the buffer pallet 9 by using the robot 4 (S27).

Upon loading the obstructing article onto the buffer pallet 9, the processor 11 loads an article (target articles) of the warehouse pallet 3 onto the roll pallet 8 by using the robot 4 (S28). Upon loading the article onto the roll pallet 8, the processor 11 returns the obstructing article of the buffer pallet 9 back to the warehouse pallet 3 by using the robot 4 (S29).

Upon loading the article onto the roll pallet 8 (S26) or returning the obstructing article back to the warehouse pallet 3 (S29), the processor 11 returns the warehouse pallet 3 back to the original position by using the conveyor 2 (S30).

Upon returning the warehouse pallet 3 back to the original position, the processor 11 updates an inventory database (S31). Upon updating the inventory database, the processor 11 determines whether loading onto the roll pallet 8 is completed (S32). That is, the processor 11 determines whether the "destination" of the current record and the "destination" of the next record differ.

Upon determining that loading onto the roll pallet 8 is not completed (S32, NO), the processor 11 returns to S24.

Upon determining that loading onto the roll pallet 8 is completed (S32, YES), the processor 11 returns the roll pallet 8 in the region A or B back to the original position by using the AGV 7 (S33). Upon returning the roll pallet 8 in the region A or B back to the original position, the processor 11 determines whether processing of each record of the sorting list is completed (S34).

Upon determining that processing of each record of the sorting list is not completed (S34, NO), the processor 11 returns to S23.

Upon determining that processing of each record of the sorting list is completed (S34, YES), the processor 11 ends the operation.

In a case where the obstructing article is an article to be loaded onto a subsequent roll pallet 8, the processor 11 does not need to return the obstructing article back to the warehouse pallet 3. In this case, the processor 11 may take the article off of the buffer pallet 9 and load it onto the subsequent roll pallet 8.

The processor 11 may transport the subsequent roll pallet 8 to the region A or B while the article is being loaded onto the roll pallet 8.

In the logistics system configured as described above, when packages are mixed in the warehouse pallet, an article that obstructs taking off is temporarily loaded onto the buffer pallet. Thus, the logistics system can appropriately sort the articles even when the warehouse pallet is loaded with mixed packages.

### (Third Embodiment)

Next, the third embodiment will be described.

The logistics system according to the third embodiment differs from that according to the first embodiment in that articles are temporarily buffered and rearranged. Therefore, the other points are denoted by the same reference numerals and will not be described in detail.

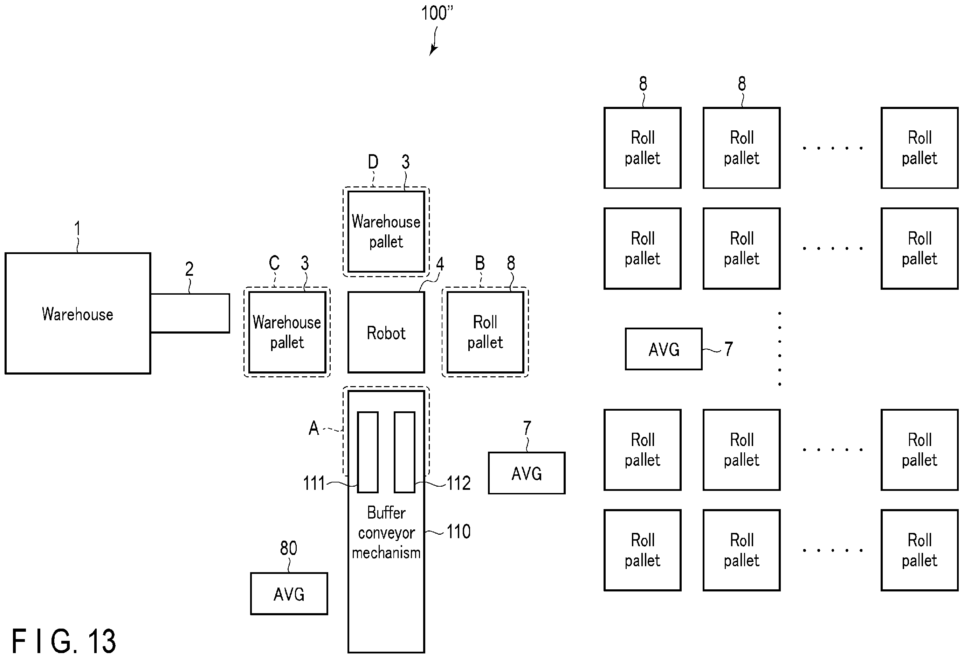

FIG. 13 schematically illustrates a configuration example of a logistics system 100'' according to the third embodiment. As shown in FIG. 13, the logistics system 100'' includes a buffer conveyor mechanism 110 in a region including the region A. The logistics system 100" includes an AGV 80.

Here, the warehouse pallet 3 loads a plurality of types of articles (mixed loading).

The buffer conveyor mechanism 110 is a mechanism for temporarily loading an article. The buffer conveyor mechanism 110 temporarily loads an article taken off of the warehouse pallet 3 by the robot 4.

The buffer conveyor mechanism 110 includes a first buffer conveyor 111 (first buffer mechanism), a second buffer conveyor 112 (second buffer mechanism), and the like.

The first buffer conveyor 111 includes a belt or a roller onto which articles are loaded. One end of the first buffer conveyor 111 reaches a position (here, the region A) where the robot 4 can load articles. That is, the first buffer conveyor 111 is loaded with articles by the robot 4. The first buffer conveyor 111 conveys the loaded articles in a predetermined direction or a reverse direction.

The second buffer conveyor 112 includes a belt or a roller on which the articles are loaded. One end of the second buffer conveyor 112 reaches a position (here, the region A) where the robot 4 can load articles. That is, the second buffer conveyor 112 is loaded with articles by the robot 4. The second buffer conveyor 112 conveys the loaded articles in a predetermined direction or a reverse direction.

The second buffer conveyor 112 loads articles independently of the first buffer conveyor 111. That is, the articles loaded onto the first buffer conveyor 111 and the second buffer conveyor 112 may be independent from each other or may be interconnected.

The buffer conveyor mechanism 110 operates according to a control signal from the WES 10.

The AGV 80 functions as a rearrangement mechanism for rearranging the articles loaded onto the second buffer conveyor 112. For example, the AGV 80 takes an article from the row of articles on the second buffer conveyor 112. The AGV 80 puts the taken-off article between other articles. The AGV 80 operates based on a control signal from the second WCS 30.

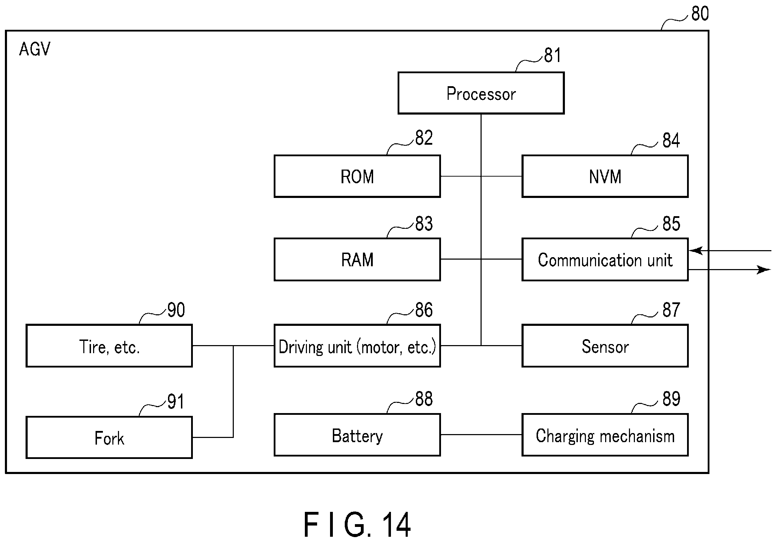

FIG. 14 is a block diagram illustrating a configuration example of the AGV 80. The AGV 80 includes a processor 81, a ROM 82, a RAM 83, an NVM 84, a communication unit 85, a driving unit 86, a sensor 87, a battery 88, a charging mechanism 89, a tire 90, a fork 91, and the like.

The processor 81 has a function of controlling the entire operation of the AGV 80. The processor 81 may include an internal cache, various interfaces, and the like. The processor 81 realizes various processes by executing a program stored in advance in the internal memory, the ROM 82, or the NVM 84.

For example, the processor 81 is a CPU. The processor 81 may be realized by hardware such as an LSI, an ASIC, or an FPGA.

The processor 81 performs processing such as calculation and control necessary for operations of acceleration, deceleration, stopping, changing direction, and gripping of a package. Based on a control signal from the second WCS 30 or the like, the processor 81 executes a program stored in the ROM 82 or the like, thereby generating a drive signal and outputting the drive signal to each unit.

For example, the second WCS 30 transmits a control signal for moving the AGV 80 from the current position to the predetermined position and from the first position to the second position. The processor 81 of the AGV 80 outputs a drive signal according to the control signal transmitted from the second WCS 30. Thus, the AGV 80 moves from the current position to the predetermined position and from the first position.

The processor 81 grips, using the fork 91, an article according to the control signal transmitted from the second WCS 30. The processor 81 expands the interval between the articles by using the fork 91. Through these operations, the AGV 80 takes the article from the row of articles and puts it between other articles.

The ROM 82 is a non-transitory computer-readable storage medium and stores the program described above. The ROM 82 stores data used by the processor 81 to perform various processes, various setting values, or the like. The RAM 83 is a memory used for reading and writing data. The RAM 83 is used as a so-called work area or the like in which data used by the processor 81 in performing various processes is temporarily stored.

The NVM 84 is a non-transitory computer-readable storage medium and may store the program described above. The NVM 84 stores data used by the processor 81 in performing various processes, data generated through the processes performed by the processor 81, various setting values, and the like.

The communication unit 85 is an interface for transmitting and receiving data to and from the second WCS 30 or the like through a wireless LAN access point or the like. For example, the communication unit 85 supports wireless LAN connection.

The driving unit 86 is a motor or the like, and the motor is rotated or stopped based on a drive signal output from the processor 81. The power of the motor is transmitted to the tire 90 and then to the steering mechanism. The AGV 80 moves to the target position through the power from the motor.

The driving unit 86 drives the fork 91 based on a drive signal output from the processor 81. The fork 91 grips the article through the power of the driving unit 86. The fork 91 expands the space between the articles through the power of the driving unit 86.

The sensor 87 corresponds to a plurality of reflection sensors. Each reflection sensor is mounted around the AGV 80. Each reflection sensor emits a laser beam, detects a time from emission of the laser beam to returning of the laser beam reflected by an object, detects a distance to the object based on the detected time, and notifies the processor 81 of a detection signal. The processor 81 outputs a control signal for controlling the travel of the AGV 80 based on the detection signal from the sensor 87. For example, based on the detection signal from the sensor 87, the processor 81 outputs a control signal for deceleration, stopping, or the like to avoid collision with the object. A camera other than the sensor 87 may be provided, and the camera may capture an image of the surroundings and output the captured image to the processor 81. In this case, the processor 81 analyzes the captured image and outputs a control signal for deceleration, stopping, or the like to avoid collision with the object.

The battery 88 supplies necessary electric power to the driving unit 86 or the like. The charging mechanism 89 is a mechanism that connects the charging station and the battery 88, and the battery 88 is charged with electric power supplied from the charging station or the like via the charging mechanism 89.

The fork 91 includes two forks. The fork 91 has a structure of protruding in the horizontal direction. The fork 91 grips the article through the power of the driving unit 86. The fork 91 expands the space between the articles by expanding in a state of being inserted between the articles.

Next, functions realized by the WES 10 according to the third embodiment will be described.

The WES 10 according to the third embodiment realizes the following functions in addition to the functions of that according to the first and second embodiments.

First, the processor 11 of the WES 10 has a function of temporarily loading an obstructing article of the warehouse pallet 3 onto the first buffer conveyor 111.

Upon determining that a target article cannot be taken off of the warehouse pallet 3 without moving another article, the processor 11 takes the obstructing article off of the warehouse pallet 3 and loads it onto the first buffer conveyor 111 by using the robot 4.

After taking off the target article, the processor 11 returns the obstructing article loaded onto the first buffer conveyor 111 back to the warehouse pallet 3.

The processor 11 has a function of loading the target article onto the second buffer conveyor 112.

Upon determining that the target article can be taken off of the warehouse pallet 3 without moving another article, or loading the obstructing article onto the first buffer conveyor 111, the processor 11 takes the target article off of the warehouse pallet 3 by using the robot 4.

Upon taking the target article off of the warehouse pallet 3, the processor 11 loads the taken-off target article onto the second buffer conveyor 112 by using the robot 4.

The processor 11 repeats the above-described operation and loads articles to be loaded onto the roll pallet 8 in the region B onto the second buffer conveyor 112. That is, the processor 11 repeats the above-described operation as long as the "destination" of the current record and the "destination" of the next record are the same.

The processor 11 has a function of rearranging articles on the second buffer conveyor 112.

Upon completion of loading onto the second buffer conveyor 112, the processor 11 rearranges the articles on the second buffer conveyor 112 by using the AGV 80. For example, the processor 11 rearranges the articles on the second buffer conveyor 112 so that the heavier articles are loaded from the bottom of the roll pallet 8.

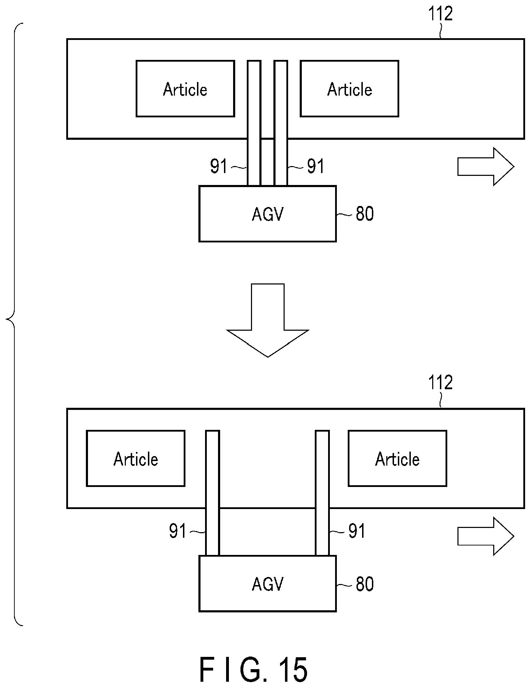

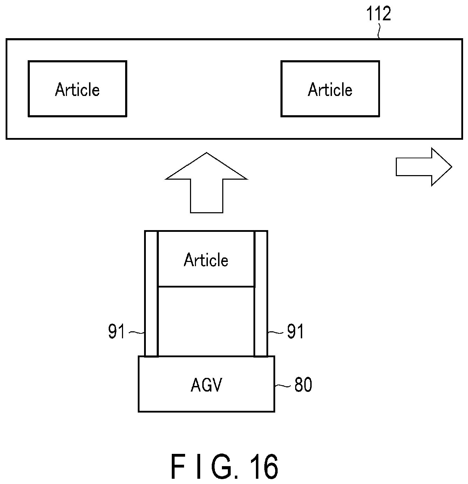

FIGS. 15 and 16 show an operation example in which the AGV 80 rearranges articles. FIGS. 15 and 16 are top views of the AGV 80 and second buffer conveyor 112.

As shown in FIG. 15, the AGV 80 inserts the fork 91 between the articles in a closed state. Upon inserting the fork 91 between the articles, the AGV 80 spreads the fork 91 apart. When the fork 91 is expanded, the interval between the articles is expanded.

As shown in FIG. 16, the AGV 80 takes an article from the article row of the second buffer conveyor 112 and grips it. The AGV 80 inserts the fork 91 between the spread articles while gripping the article with the fork 91. Upon inserting the fork 91, the AGV 80 spreads the fork 91 to release the article onto the second buffer conveyor 112.

The AGV 80 rearranges the articles on the second buffer conveyor 112 through the operation described above.

The processor 11 may rearrange the articles by using the second buffer conveyor 112. For example, the processor 11 may insert an article at a leading end or a trailing end of the article row by using the second buffer conveyor 112.

The processor 11 has a function of loading the articles loaded onto the second buffer conveyor 112 onto the roll pallet 8 in the region B.

Upon completion of rearrangement of the articles in the second buffer conveyor 112, the processor 11 takes the article off of the second buffer conveyor 112 and loads it onto the roll pallet 8.

For example, the processor 11 controls the second buffer conveyor 112 to convey the leading article of the article row to the position of the region A. The processor 11 takes the leading article off of the second buffer conveyor 112 and loads the article onto the roll pallet 8 by using the robot 4.

Upon the robot 4 taking off the leading article, the processor 11 controls the second buffer conveyor 112 to convey the next article to the position of the region A.

The processor 11 repeats the above-described operation, and loads articles loaded onto the second buffer conveyor 112 onto the roll pallet 8 in the region B.

Next, an operation example of the WES 10 will be described.

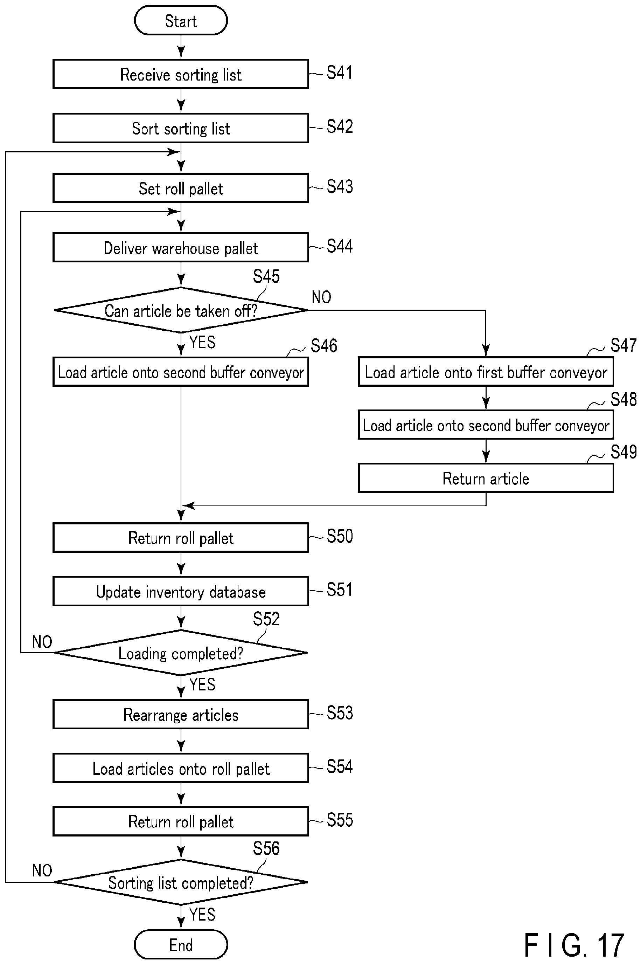

FIG. 17 is a flowchart for explaining an operation example of the WES 10.

First, the processor 11 of the WES 10 receives a sorting list from the WMS 5 via the communication unit 15 (S41). Upon receiving the sorting list, the processor 11 rearranges records of the received sorting list (S42).

Upon rearranging the records of the sorting list, the processor 11 transports a roll pallet 8 corresponding to a "destination" of an unprocessed leading record to the region B by using the AGV 7 (S43).

Upon transporting the roll pallet 8 to the region B, the processor 11 delivers the warehouse pallet 3 loaded with articles indicated by the "ID" of the record from the warehouse 1 to the region C or D by using the conveyor 2 (S44) .

Upon delivering the warehouse pallet 3, the processor 11 determines whether an article can be taken off without moving another article (S45). Upon determining that the article can be taken off without moving another article (S45, YES), the processor 11 loads the article of the warehouse pallet 3 onto the second buffer conveyor 112 by using the robot 4 (S46).

Upon determining that the article cannot be taken off without moving another article (S45, NO), the processor 11 loads the obstructing article of the warehouse pallet 3 onto the first buffer conveyor 111 by using the robot 4 (S47) .

Upon loading the obstructing article onto the first buffer conveyor 111, the processor 11 loads the article (target article) of the warehouse pallet 3 onto the second buffer conveyor 112 by using the robot 4 (S48). Upon loading the article onto the second buffer conveyor 112, the processor 11 returns the obstructing article of the first buffer conveyor 111 back to the warehouse pallet 3 by using the robot 4 (S49).

Upon loading the article onto the second buffer conveyor 112 (S46) or returning the obstructing article back to the warehouse pallet 3 (S49), the processor 11 returns the warehouse pallet 3 back to the original position by using the conveyor 2 (S50).

Upon returning the warehouse pallet 3 back to the original position, the processor 11 updates an inventory database (S51). Upon updating the inventory database, the processor 11 determines whether loading onto the second buffer conveyor 112 is completed (S52). That is, the processor 11 determines whether the "destination" of the current record and the "destination" of the next record differ.

Upon determining that loading onto the second buffer conveyor 112 is not completed (S52, NO), the processor 11 returns to S44.

Upon determining that loading onto the second buffer conveyor 112 is completed (S52, YES), the processor 11 rearranges the articles on the second buffer conveyor 112 by using the AGV 80 or the like (S53).

Upon rearranging the articles, the processor 11 loads the articles on the second buffer conveyor 112 onto the roll pallet 8 in the region B by using the robot 4 (S54). Upon loading the articles onto the roll pallet 8, the processor 11 returns the roll pallet 8 in the region B back to the original position by using the AGV 7 (S55). Upon returning the roll pallet 8 in the region B back to the original position, the processor 11 determines whether processing of each record of the sorting list is completed (S56).

Upon determining that processing of each record of the sorting list is not completed (S56, NO), the processor 11 returns to S43.

Upon determining that processing of each record of the sorting list is completed (S56, YES), the processor 11 ends the operation.

The logistics system 100'' may include a rearrangement mechanism other than the AGV 80. The second buffer conveyor 112 may function as a rearrangement mechanism.

The processor 11 may deliver the next warehouse pallet 3 to the region C or D while the articles of the warehouse pallet 3 are being loaded onto the roll pallet 8.

In the logistics system configured as described above, articles to be loaded onto the roll pallet are temporarily loaded onto the buffer conveyor mechanism. The logistics system rearranges the articles in the buffer conveyor mechanism. Thus, the logistics system can load the articles onto the roll pallet in an appropriate order.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device comprising:
a communication unit configured to communicate with a host device configured to manage articles and sorting destinations of the articles, and an automated guided vehicle configured to transport a roll pallet on which articles are loaded for each sorting destination; and
a processor configured to:
acquire the articles and information on the sorting destinations of the articles from the host device via the communication unit; and
perform control to transmit, via the communication unit, a control signal to the automated guided vehicle to transport the roll pallet set for each sorting destination to a predetermined region.

2. The information processing device according to claim 1,
wherein the communication unit is configured to communicate with a robot configured to grip the articles and a delivering mechanism configured to deliver a warehouse pallet loaded with the articles, and
the processor is configured to:
perform control to transmit, via the communication unit, a control signal to the delivering mechanism to deliver the warehouse pallet; and
perform control to transmit, via the communication unit, a control signal to the robot to take the articles off of the warehouse pallet and load the taken-off articles onto the roll pallet.

3. The information processing device according to claim 2,
wherein the processor is configured to perform control to transmit, via the communication unit, a control signal to the robot to take an obstructing article obstructing taking of the articles off of the warehouse pallet and load the taken-off obstructing article onto a first buffer mechanism.

4. The information processing device according to claim 3,
wherein the processor is configured to perform control to transmit, via the communication unit, a control signal to the robot to load the obstructing article of the first buffer mechanism onto the warehouse pallet by using the robot after loading the articles onto the roll pallet.

5. The information processing device according to claim 4,
wherein the processor is configured to perform control to transmit, via the communication unit, a control signal to the robot to return the warehouse pallet by using the delivering mechanism after loading the obstructing article of the first buffer mechanism onto the warehouse pallet by using the robot.

6. The information processing device according to any one of claims 3 to 5,
wherein the first buffer mechanism comprises a pallet.

7. The information processing device according to any one of claims 3 and 4,
wherein the first buffer mechanism comprises a belt.

8. The information processing device according to any one of claims 2 to 7,
wherein the processor is configured to:
perform control to transmit, via the communication unit, a control signal to the robot to take the articles off of the warehouse pallet and load the taken-off articles onto a second buffer mechanism; and
perform control to transmit, via the communication unit, a control signal to the robot to load the articles of the second buffer mechanism onto the roll pallet.

9. The information processing device according to claim 8,
wherein the communication unit is configured to communicate with a rearrangement mechanism, and
the processor is configured to perform control to transmit, via the communication unit, a control signal to the rearrangement mechanism to rearrange the articles in the second buffer mechanism.

10. The information processing device according to claim 8 or 9,
wherein the second buffer mechanism comprises a belt.

11. An information processing method executed by a processor, the method comprising:
acquiring articles and information on sorting destinations of the articles from a host device; and
performing control to transmit a control signal to an automated guided vehicle configured to transport a roll pallet to transport the roll pallet set for each sorting destination to a predetermined region.

12. A program executed by a processor,
the program causing the processor to realize:
a function of acquiring articles and information on sorting destinations of the articles from a host device; and
a function of performing control to transmit a control signal to an automated guided vehicle configured to transport a roll pallet to transport the roll pallet set for each sorting destination to a predetermined region.

13. A system comprising:
a robot configured to grip articles;
a delivering mechanism configured to deliver a warehouse pallet loaded with the articles;
an automated guided vehicle configured to transport a roll pallet on which the articles are loaded for each sorting destination; and
an information processing device comprising:
a communication unit configured to communicate with a host device configured to manage articles and sorting destinations of the articles, the robot, the delivering mechanism, and the automated guided vehicle; and
a processor configured to:
acquire, via the communication unit, the articles and information on the sorting destinations of the articles from the host device;
perform control to transmit a control signal to the automated guided vehicle to transport the roll pallet set for each sorting destination to a predetermined region via the communication unit;
perform control to transmit, via the communication unit, a control signal to the delivering mechanism to deliver the warehouse pallet; and
perform control to transmit, via the communication unit, a control signal to the robot to take the articles off of the warehouse pallet and load the taken-off articles onto the roll pallet.
